# FASCICULE DE BREVET EUROPEEN

(11) **EP 3 691 919 B1**
(45) Date de publication et mention de la délivrance du brevet: **29.11.2023**
(21) Numéro de dépôt: 18792979.9
(22) Date de dépôt: 01.10.2018
(51) Int. Cl.: B60C 15/00, B60C 15/06, B60C 9/04, B60C 9/07

(54) **PNEUMATIQUE AVEC ZONE BASSE RENFORCEE**
REIFEN MIT EINER VERSTÄRKTEN UNTEREN ZONE
TYRE HAVING A REINFORCED LOWER ZONE

(30) Priorité: 02.10.2017 FR 1759177
(43) Date de publication de la demande: 12.08.2020
(73) Titulaire: Compagnie Générale des Etablissements Michelin, 63000 Clermont-Ferrand (FR)
(72) Inventeur: FERIGO, Hervé, 63040 Clermont Ferrand Cedex 9 (FR); PROST, Pascal, 63040 Clermont Ferrand Cedex 9 (FR)
(74) Mandataire: M.F.P. Michelin
(86) Numéro de dépôt international: PCT/FR2018/052408
(87) Numéro de publication internationale: WO 2019/069002

(56) Documents cités:
- EP-A1- 2 116 398
- WO-A1-2013/127680
- WO-A2-2011/067211
- WO-A2-2011/067211
- JP-A- 2003 226 118
- JP-A- 2003 312 208
- US-A- 4 854 362

## Description

### DOMAINE DE L'INVENTION

La présente invention concerne les pneumatiques pour véhicule automobile, en particulier les véhicules de tourisme à quatre roues.

### ETAT DE LA TECHNIQUE

La réduction des émissions de gaz à effet de serre des transports est un des défis majeurs devant lequel se trouvent les constructeurs de véhicules aujourd'hui. Le pneumatique constitue une source importante de progrès, par le biais d'un abaissement de la résistance au roulement, car celle-ci a un impact direct sur la consommation de carburant du véhicule.

Or, l'ensemble formé par le bourrelet et la partie radialement intérieure du flanc d'un pneumatique fait partie des composantes du pneumatique dont la structure a une répercussion très nette sur la résistance au roulement du pneumatique. Son rôle est multiple : il reprend les tensions de l'armature de carcasse et il transmet les efforts subis par le pneumatique du flanc vers la jante. Il assure donc le guidage du sommet du pneumatique à partir de la jante. Son influence sur la tenue de route du pneumatique est considérable, surtout lorsque le pneumatique est fortement chargé. L'ensemble de ces fonctions est habituellement assuré par l'association d'une armature (comprenant la tringle et le retournement de l'armature de carcasse autour de celle-ci) et d'un « bourrage » en composition caoutchouteuse. Le compromis entre la rigidité à atteindre, en particulier pour le guidage du sommet, et l'endurance attendue conduit généralement à prévoir une certaine trajectoire de l'armature de carcasse et à utiliser un bourrage volumineux (haut et/ou épais) et très rigide (de l'ordre de 50 MPa). La contrepartie de cette géométrie est une perte hystérétique importante, notamment au niveau du bourrage. L'action rigidifiante du bourrage s'exerce surtout dans la zone éloignée du bourrelet et nécessite donc un bourrage d'autant plus volumineux et, par conséquent, une perte hystérétique encore plus importante, ce qui est néfaste pour la résistance au roulement du pneumatique.

Il a ainsi été proposé des pneumatiques ayant une structure visant à réduire l'utilisation de ces gommes rigides afin de réaliser des gains de résistance au roulement. Toutefois, les structures proposées tendent à diminuer fortement la rigidité globale du pneumatique ce qui peut être rédhibitoire, notamment en termes de comportement routier, et tout particulièrement en vue d'une homologation chez les constructeurs automobiles.

Pour pallier à ce problème, il a été proposé de réduire le volume utilisé de gomme rigide en zone basse du pneumatique et de compenser cette réduction de gomme rigide par l'ajout d'une structure de renfort dans cette zone basse du pneumatique. Des structures de pneumatique ont donc été développées selon ce principe, et on peut citer celles décrites par exemple dans la demande internationale publiée le 9 juin 2011 sous la référence WO2011/067211, dans la demande internationale publiée le 6 septembre 2013 sous la référence WO2013/127680, ou encore dans la demande internationale publiée le 6 février 2014 sous la référence WO2014/019939. Ces solutions sont intéressantes pour améliorer le compromis rigidité / résistance au roulement tel qu'évoqué précédemment mais pourraient être encore optimisées et/ou simplifiées. En outre, ces solutions permettent de réduire la résistance au roulement tout en conservant la rigidité latérale mais elles pourraient encore être améliorées en ce qui concerne la rigidité à la dérive.

Un but de la présente invention est donc de proposer un pneumatique, notamment un pneumatique pour véhicule de tourisme à quatre roues, ayant une faible résistance au roulement tout en présentant une rigidité globale satisfaisante, en particulier une rigidité latérale et une rigidité de dérive.

Un autre but de la présente invention est de proposer un pneumatique, notamment un pneumatique pour véhicule de tourisme à quatre roues présentant un compromis rigidité / résistance au roulement satisfaisant, ne venant pas réduire l'endurance du pneumatique, et qui peut en outre être fabriqué simplement.

### EXPOSE DE L'INVENTION

A cette fin, on propose un pneumatique pour véhicule automobile conforme à la revendication 1 et aux revendications qui en dépendent.

Des aspects préférés mais non limitatifs de ce pneumatique, pris seuls ou en combinaison, sont les suivants :
- les éléments de renforcement croisés de l'armature de carcasse sont agencés pour former le brin retour et/ou au moins une portion du brin aller.
- les éléments de renforcement croisés de l'armature de carcasse sont agencés pour former le brin retour et une portion du brin aller adjacente audit brin retour.
- la portion du brin aller non-adjacente audit brin retour est formée d'éléments de renforcement non-croisés orientés selon un angle de l'ordre de 90° par rapport à la direction circonférentielle.
- les éléments de renforcement croisés de l'armature de carcasse sont orientés selon un angle compris entre 75° et 80° par rapport à la direction circonférentielle.
- l'armature de carcasse comprend des éléments de renforcement croisés orientés selon des angles opposés par rapport à la direction circonférentielle.
- l'armature de rigidification est positionnée axialement entre le brin aller et le brin retour du flanc correspondant.
- l'armature de rigidification est positionnée axialement à l'extérieur par rapport au brin retour du flanc correspondant.
- l'armature de rigidification est positionnée axialement à l'intérieur par rapport au brin aller du flanc correspondant.
- l'armature de rigidification est agencée de sorte à être au moins partiellement adjacente au brin retour du flanc correspondant.
- l'armature de rigidification est agencée de sorte à être entièrement adjacente au brin retour du flanc correspondant.
- l'armature de rigidification est agencée de sorte à être non-adjacente au brin retour du flanc correspondant.
- les éléments de rigidification de l'armature de rigidification comprennent des fils textiles et/ou métalliques.
- les éléments de rigidification de l'armature de rigidification sont formés à partir de câbles métalliques ou textiles.
- les éléments de rigidification de l'armature de rigidification sont formés à partir de fils fabriqués dans un matériau non élastomérique choisi parmi un polyester, un polyamide, une polycétone, un alcool polyvinylique, une cellulose, une fibre minérale, une fibre naturelle ou un mélange de ces matériaux.
- les éléments de rigidification de l'armature de rigidification se présentent sous forme de bandes.
- les bandes ont une épaisseur de l'ordre de 1 mm et une largeur de l'ordre de 10 mm.
- les éléments de rigidification de l'armature de rigidification sont fractionnés, de préférence par une coupe mécanique ou une coupe laser.
- les éléments de rigidification de l'armature de rigidification sont espacés d'un pas régulier, de préférence un pas de l'ordre de 1 mm.
- les éléments de rigidification de l'armature de rigidification sont noyés dans une composition caoutchouteuse présentant un module MA10 inférieur à 10 MPa, et de préférence compris entre 2 MPa et 6 MPa.
- les éléments de rigidification sont orientés selon un angle de l'ordre de zéro degré par rapport à la direction circonférentielle du pneumatique.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- La figure 1 représente un pneumatique conventionnel ;
- La figure 2 représente une vue en perspective partielle du pneumatique conventionnel de la figure 1 ;
- La figure 3 représente, en coupe radiale, une portion d'un pneumatique selon l'art antérieur ;
- La figure 4 illustre comment la hauteur H d'un pneumatique est déterminée.
- La figure 5 représente, en coupe radiale, une partie d'un pneumatique selon un premier mode de réalisation de l'invention ;
- La figure 6 est une représentation schématique d'un positionnement d'armature de rigidification par rapport à une armature de carcasse d'un pneumatique selon un deuxième mode de réalisation de l'invention ;
- La figure 7 est une représentation schématique d'un positionnement d'armature de rigidification par rapport à une armature de carcasse d'un pneumatique selon un troisième mode de réalisation de l'invention ;
- La figure 8 est une représentation schématique d'un positionnement d'armature de rigidification par rapport à une armature de carcasse d'un pneumatique selon un quatrième mode de réalisation de l'invention ;
- La figure 9 est une représentation schématique d'un premier agencement des éléments de renforcement d'une armature de carcasse formant le brin aller et le brin retour ;
- La figure 10 est une représentation schématique d'un deuxième agencement des éléments de renforcement d'une armature de carcasse formant le brin aller et le brin retour ;
- La figure 11 est une représentation schématique d'un troisième agencement des éléments de renforcement d'une armature de carcasse formant le brin aller et le brin retour ;
- La figure 12 est une représentation schématique d'un pneumatique avant et après sa conformation.

### DESCRIPTION DETAILLEE DE L'INVENTION

Dans ce document, on entend par « surface de roulement » l'ensemble des points de la bande de roulement d'un pneumatique qui sont susceptibles d'entrer en contact avec le sol lorsque le pneumatique roule.

Dans l'emploi du terme « radial » il convient de distinguer plusieurs utilisations différentes du mot par la personne du métier.

Premièrement, l'expression se réfère à un rayon du pneumatique. Une « direction radiale » est une direction coupant l'axe de rotation du pneumatique et perpendiculaire à celui-ci. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Par ailleurs, on qualifie de rayon Rx d'un point X du pneumatique la distance radiale entre l'axe de rotation dudit pneumatique et le point X.

En revanche, un fil ou une armature est dit « radial » lorsque le fil ou les éléments de renforcement de l'armature font avec la direction circonférentielle un angle supérieur ou égal à 80° et inférieur ou égal à 90°. Précisons que dans le présent document, le terme « fil » doit être entendu dans un sens tout à fait général et comprend les fils se présentant sous la forme de monofilament, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique. Un « plan radial ou méridien » est un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8.

Le « plan médian ou plan équatorial » du pneumatique est le plan qui est perpendiculaire à l'axe de rotation du pneumatique et qui se situe à équidistance des structures annulaires de renforcement de chaque bourrelet. Ce plan divise le pneumatique en deux moitiés sensiblement égales, c'est-à-dire qui passe par le milieu de la bande de roulement.

Une « direction circonférentielle » est une direction qui est perpendiculaire à la fois à un rayon du pneumatique et à la direction axiale. Cela correspond à la direction de roulement du pneumatique.

Une « coupe circonférentielle » ou « section circonférentielle » est respectivement une coupe ou une section selon un plan perpendiculaire à l'axe de rotation du pneumatique. Un « plan circonférentiel » est un plan perpendiculaire à l'axe de rotation du pneumatique.

Pour faciliter la lecture de la description des variantes montrées avec les figures, les mêmes références sont employées pour désigner des éléments de structure identiques.

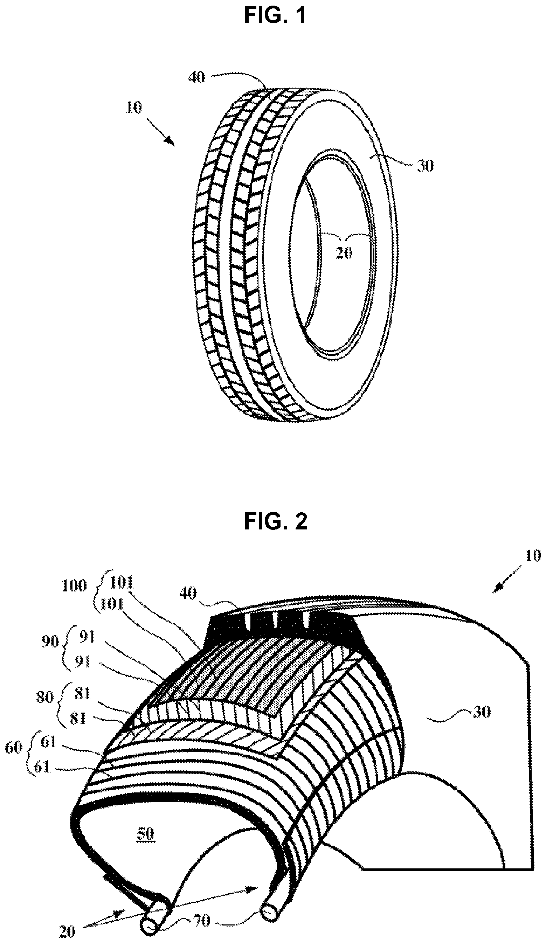

La figure 1 représente schématiquement un pneumatique 10 traditionnel. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 conventionnel et illustre les différentes composantes du pneumatique. Le pneumatique 10 comprend une armature de carcasse 60 constituée de fils 61 enrobés de composition caoutchouteuse, et deux bourrelets 20 comportant chacun une tringle 70 qui maintient le pneumatique 10 sur la jante (non représentée). L'armature de carcasse 60 est ancrée dans chacun des bourrelets 20 par retournement. Les fils 61 formant l'armature de carcasse 60 sont ici orientés sensiblement à 90° par rapport à la direction circonférentielle, le pneumatique décrit ici est de type à structure radiale.

Le pneumatique 10 comporte en outre une armature de sommet, l'armature au sommet comprenant dans l'exemple de la figure 2 deux nappes 80 et 90. Chacune des nappes 80 et 90 est renforcée par des éléments de renforcement 81 et 91 filaires qui sont parallèles dans chaque couche et de préférence croisés d'une couche à l'autre. Les nappes 80 et 90 sont par exemple agencées de sorte que les éléments de renforcement filaires fassent avec la direction circonférentielle des angles compris entre 10° et 70°.

Le pneumatique comporte encore une armature de frettage 100, disposée radialement à l'extérieur de l'armature de sommet, cette armature de frettage étant formée d'éléments de renforcement 101 orientés circonférentiellement et enroulés en hélice. Une bande de roulement 40 est posée sur l'armature de frettage ; c'est cette bande de roulement 40 qui assure le contact du pneumatique 10 avec la route.

Le pneumatique 10 représenté à la figure 2 est un pneu « tubeless » : il comprend une « gomme intérieure » 50 en composition caoutchouteuse imperméable au gaz de gonflage, recouvrant la surface intérieure du pneumatique.

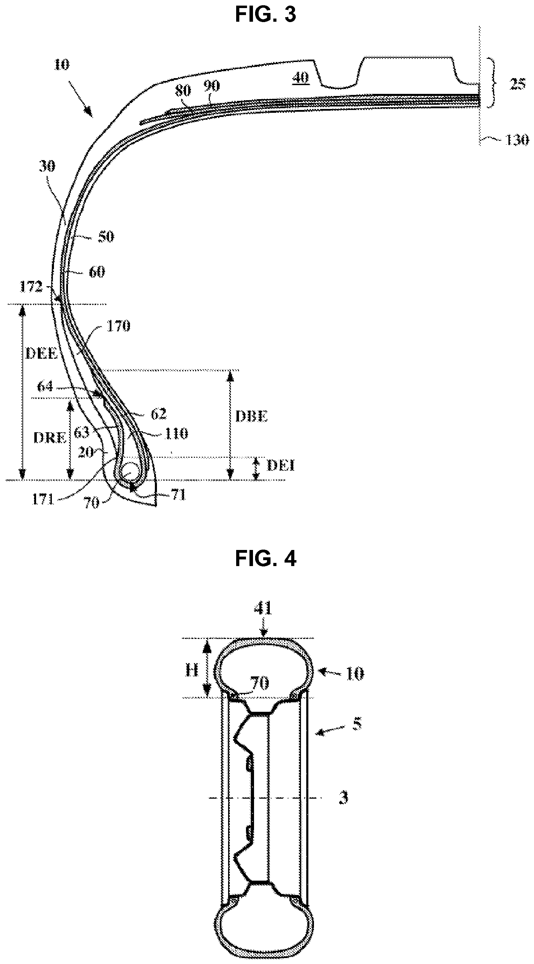

La figure 3 représente schématiquement, en coupe radiale, une portion d'un pneumatique 10 de l'art antérieur, de type «Energy^{™} Saver » commercialisé par Michelin. Le pneumatique 10 comporte deux bourrelets 20 destinés à entrer en contact avec une jante de montage (non représentée), chaque bourrelet 20 comportant une tringle 70. Deux flancs 30 prolongent les bourrelets 20 radialement vers l'extérieur et s'unissent dans un sommet 25 comprenant une armature de sommet formée d'une première couche d'éléments de renforcement 80 et d'une deuxième couche d'éléments de renforcement 90, et surmontée radialement d'une bande de roulement 40. Chaque couche comprend des éléments de renforcement filaires, enrobés dans une matrice formée de composition caoutchouteuse. Les éléments de renforcement de chaque couche sont substantiellement parallèles entre eux ; les éléments de renforcement des deux couches sont croisés d'une couche à l'autre selon un angle d'environ 20°, comme cela est bien connu de la personne du métier pour les pneumatiques dits radiaux. Le plan médian du pneumatique porte la référence 130.

Le pneumatique 10 comporte encore une armature de carcasse 60 qui s'étend depuis les bourrelets 20 à travers les flancs 30 jusqu'au sommet 25. Cette armature de carcasse 60 comporte ici des éléments de renforcement filaires orientés substantiellement radialement, c'est-à-dire faisant avec la direction circonférentielle un angle supérieur ou égal à 80° et inférieur ou égal à 90°. Préférentiellement, les éléments de renforcement filaires de l'armature de carcasse 60 forment avec la direction circonférentielle un angle de l'ordre de 90°.

L'armature de carcasse 60 comporte une pluralité d'éléments de renforcement de carcasse et étant ancrée dans les deux bourrelets 20 par un retournement autour de la tringle 70, de manière à former dans chaque bourrelet un brin aller 62 et un brin retour 63. Le brin retour s'étend radialement à l'extérieur jusqu'à une extrémité 64 située à une distance radiale DRE du point 71 radialement le plus à l'intérieur de la structure annulaire de renforcement du bourrelet.

La « hauteur radiale » H d'un pneumatique est définie comme la distance radiale entre le point 71 radialement le plus à l'intérieur de la structure annulaire de renforcement 70 du bourrelet 20 et le point 41 (voir figure 4) radialement le plus à l'extérieur de la bande de roulement 40 lorsque le pneumatique 10 est monté sur une jante de montage 5 (comme cela est représenté à la figure 4) et gonflé à sa pression de service.

Chaque bourrelet comporte un bourrage 110, le bourrage étant situé pour l'essentiel radialement à l'extérieur de la tringle 70 et entre le brin aller 62 et le brin retour 63 de l'armature de carcasse 60. Ici la composition caoutchouteuse utilisée à un module d'élasticité de 56 MPa.

Chaque bourrelet comporte en outre une couche ou bande extérieure 170 placée axialement à l'extérieur de l'armature de carcasse et du bourrage. La bande extérieure 170 s'étend radialement à l'extérieur d'une extrémité 171 radialement intérieure de la bande extérieure 170, située à une distance DEI du point 71 radialement le plus à l'intérieur de la tringle 70, jusqu'à une extrémité 172 radialement extérieure située à une distance DEE du point 71 radialement le plus à l'intérieur de la tringle 70. En l'occurrence, la distance DEI est égale à 6.5 % et la distance DEE est égale à 41.5 % de la hauteur radiale H du pneumatique.

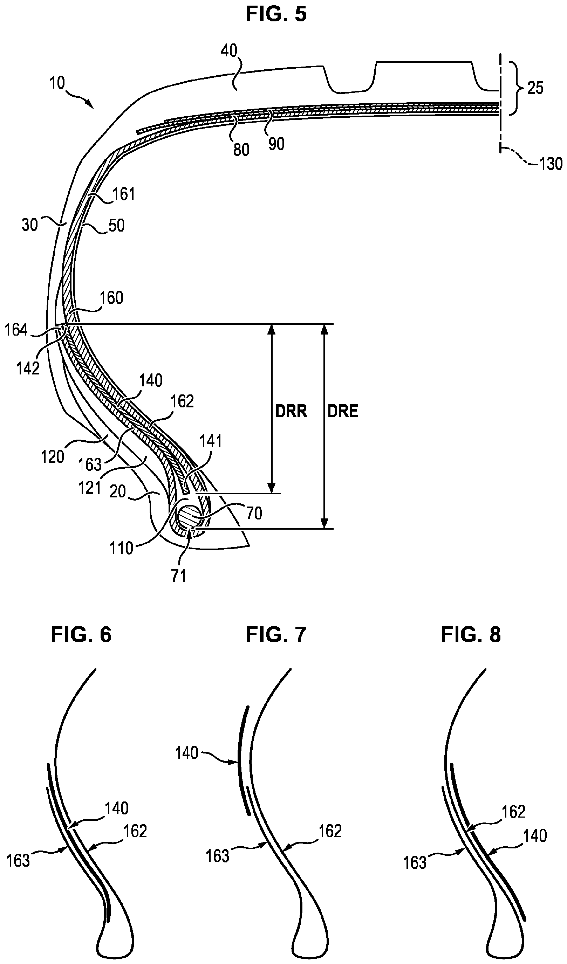

La figure 5 illustre une coupe radiale d'un pneumatique tel que proposé ici pour résoudre les inconvénients mentionnés en préambule.

Classiquement et comme déjà présenté, le pneumatique 10 comporte deux bourrelets 20 (dont un seul est représenté) destinés à entrer en contact avec une jante de montage (non représentée), chaque bourrelet comportant une tringle 70. La tringle 70 a un point 71 radialement le plus à l'intérieur. Les deux structures annulaires de renforcement 70 (dont une seule est représentée) définissent un plan médian 130 du pneumatique, perpendiculaire à l'axe de rotation du pneumatique (non représenté) et situé à équidistance des structures annulaires de renforcement 70 de chaque bourrelet. Deux flancs 30 (dont un seul est représenté) prolongent les bourrelets 20 radialement vers l'extérieur. Les deux flancs 30 s'unissent dans un sommet 25 comprenant une armature de sommet formée par au moins une nappe, et de préférence deux nappes 80 et 90, surmontée(s) d'une bande de roulement 40.

Une armature de carcasse 160 s'étend depuis les bourrelets 20 à travers les flancs 30 jusqu'au sommet 25, cette armature de carcasse 160 étant formée par une pluralité d'éléments de renforcement de carcasse.

L'armature de carcasse 160 est ancrée dans les deux bourrelets 20 par un retournement autour de la tringle 70, de manière à former dans chaque bourrelet un brin aller 162 et un brin retour 163. Le brin retour 163 s'étend radialement à l'extérieur jusqu'à une extrémité 164 située à une distance radiale DRE du point 71 radialement le plus à l'intérieur de la tringle 70.

Il est à noter que l'armature de carcasse 160 peut comprendre des éléments de renforcement de carcasse additionnels qui ne sont pas directement ancrés dans les bourrelets 20. C'est le cas notamment si l'armature de carcasse 160 est formée par plusieurs nappes de carcasse, par exemple superposées les unes sur les autres.

La distance radiale DRE est supérieure à 20% et inférieure ou égale à 95% de la hauteur radiale H du pneumatique. De préférence encore, la distance radiale DRE est supérieure à 20% et inférieure ou égale à 90% de la hauteur radiale H du pneumatique. Selon un mode de réalisation préféré, la distance radiale DRE est supérieure à 25% de la hauteur radiale H du pneumatique. Encore plus préférentiellement, la distance radiale DRE est comprise entre 40% et 60% de la hauteur radiale H du pneumatique, et de manière encore préférée la distance radiale DRE est de l'ordre de 50% de la hauteur radiale H du pneumatique.

Avantageusement au moins une portion de l'armature de carcasse 160 comprend des éléments de renforcement croisés orientés selon un angle compris entre entre 70° et 80° par rapport à la direction circonférentielle, et de préférence encore selon un angle compris entre 75° et 80° par rapport à la direction circonférentielle. Par « éléments de renforcement croisés », on entend un élément qui n'est pas considéré comme un élément radial par rapport à la direction circonférentielle.

De préférence, les éléments de renforcement croisés de l'armature de carcasse 160 sont orientés selon un angle de l'ordre de 75° ou 80° par rapport à la direction circonférentielle, voire de 75° ou 80° exactement. Par un « angle de l'ordre de X degrés », on entend un angle dont la valeur peut être comprise entre plus ou moins 5% de la valeur de X degrés.

Cette armature de carcasse 160 ayant des éléments de renforcement croisés spécifiques est associée à une armature de rigidification 140, qui est agencée dans au moins un des deux flancs 70 du pneumatique, et de préférence dans les deux flancs 70 du pneumatique. Plus spécifiquement, on prévoit une armature de rigidification 140 s'étendant entre une extrémité radialement intérieure 141 et une extrémité radialement extérieure 142, et étant formée d'une pluralité d'éléments de rigidification orientés selon un angle inférieur ou égal à 10° par rapport à la direction circonférentielle du pneumatique. De préférence, les éléments de rigidification sont orientés selon un angle nul ou faible (de l'ordre de quelques degrés, par exemple moins de 5 degrés) par rapport à la direction circonférentielle.

Cette association spécifique va permettre de réduire, voire de supprimer l'utilisation de gomme rigide dans la zone basse du pneumatique, c'est-à-dire dans la zone s'étendant à partir du bourrelet 20 jusqu'à au maximum la demie hauteur du flanc 30. En outre, cette association assure la rigidité requise pour le pneumatique, aussi bien la rigidité latérale que la rigidité de dérive.

L'armature de rigidification 140 proposée est agencée de sorte que la distance radiale DRR entre l'extrémité radialement intérieure 141 et l'extrémité radialement extérieure 142 est au moins égale à 10% de la distance DRE du brin retour du flanc correspondant. De préférence, la distance DRR est comprise entre 10% et 70% de la distance DRE.

La distance radiale DRR peut aussi être définie en fonction de la hauteur radiale H du pneumatique. La distance radiale DRR peut par exemple être au moins égale à 5% de la hauteur radiale H du pneumatique, voire au moins égale à 10% de la hauteur radiale H du pneumatique. De préférence, la distance DRR est comprise entre 10% et 70% de la hauteur radiale H.

La distance radiale DRR peut par exemple être au moins égale à 10 mm, de préférence comprise entre 10 mm et 70 mm.

Par ailleurs, cette armature de rigidification 140 est en outre de préférence agencée de sorte à être au moins partiellement adjacente au brin retour 163 du flanc 30 correspondant, de sorte à ce que la coopération de l'armature de rigidification 140 avec l'armature de carcasse 160 soit plus performante.

Les éléments de renforcement formant le brin aller 162 et le brin retour 163 de l'armature de carcasse 160 sont de préférence noyés dans au moins une première composition caoutchouteuse 120 qui présente la particularité d'avoir un faible module d'élasticité. On peut par exemple considérer une première composition caoutchouteuse ayant un module MA10 inférieur ou égal à 20 MPa, et de préférence inférieur ou égal à 10 MPa, étant entendu que le module MA10 est, pour une gomme donnée, la valeur du module e traction mesuré pour un allongement relatif de 10% de cette gomme à la température de 23°C au 2^{éme} cycle de mesure.

Les éléments de rigidification de l'armature de rigidification 140 sont quant à eux noyés dans une deuxième composition caoutchouteuse 121 également de faible module d'élasticité. Préférentiellement, la deuxième composition caoutchouteuse est identique à la première composition caoutchouteuse. La deuxième composition caoutchouteuse 121 peut par exemple avoir un module MA10 inférieur ou égal à 10 MPa, de préférence compris entre 2 MPa et 6 MPa.

Selon un exemple particulier, tel que représenté à la figure 5, la deuxième composition caoutchouteuse 121 utilisée pour noyer les éléments de rigidification de l'armature de rigidification 140 est également utilisée pour former le bourrage 110 dans la zone de retournement formée par le brin aller 162 et le brin retour 163 de l'armature de carcasse 160 autour de la tringle 70.

Selon un mode de réalisation préféré, les éléments de renforcement croisés de l'armature de carcasse 160 sont agencés pour former le brin retour 163 et/ou au moins une portion du brin aller 162.

Par exemple, les éléments de renforcement croisés de l'armature de carcasse 160 sont agencés pour former le brin retour 163 ainsi que la portion du brin aller 162 adjacente audit brin retour 163.

Dans un tel cas, il peut être avantageux que la portion 161 du brin aller 162 non-adjacente audit brin retour 163, c'est-à-dire la portion 161 du brin aller 162 situé en zone haute du flanc 30 du pneumatique, soit formée d'éléments de renforcement non-croisés orientés selon un angle de l'ordre de 90° par rapport à la direction circonférentielle.

Selon un mode de réalisation particulier, l'armature de carcasse 160 comprend des éléments de renforcement croisés orientés selon des angles opposés par rapport à la direction circonférentielle.

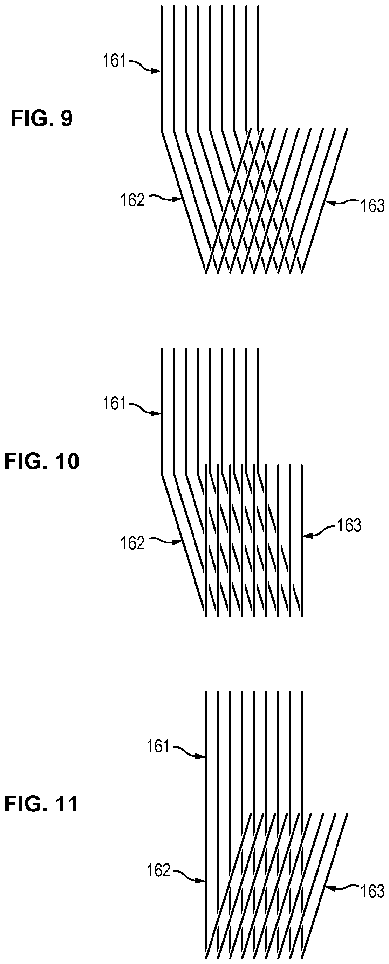

La figure 10 illustre un exemple de réalisation où les éléments de renforcement croisés de l'armature de carcasse 160 forment la partie basse du brin aller 162, tandis que le brin retour 163 et la portion 161 du brin aller 162 situé en zone haute du flanc 30 du pneumatique sont formés par des éléments de renforcement non-croisés, orientés selon un angle de l'ordre de 90° par rapport à la direction circonférentielle.

La figure 11 illustre un autre exemple de réalisation où les éléments de renforcement croisés de l'armature de carcasse 160 forment le brin retour 163, tandis l'ensemble du brin aller 162, aussi bien en partie basse qu'en partie haute 161, est formé par des éléments de renforcement non-croisés, orientés selon un angle de l'ordre de 90° par rapport à la direction circonférentielle.

La figure 9 illustre encore un autre exemple de réalisation où les éléments de renforcement croisés de l'armature de carcasse 160 forment à la fois la partie basse du brin aller 162 et le brin retour 163, tandis que la portion 161 du brin aller 162 situé en zone haute du flanc 30 du pneumatique est formée par des éléments de renforcement non-croisés, orientés selon un angle de l'ordre de 90° par rapport à la direction circonférentielle.

L'armature de rigidification 140 peut être positionnée selon divers agencements par rapport aux brins formant l'armature de carcasse 160.

Selon un premier agencement possible, l'armature de rigidification 140 est en effet positionnée axialement entre le brin aller 162 et le brin retour 163 du flanc 30 correspondant comme cela est représenté aux figures 5 et 6.

Selon un deuxième agencement possible, l'armature de rigidification 140 est positionnée axialement à l'extérieur par rapport au brin retour 163 du flanc 30 correspondant, comme cela est représenté à la figure 7.

Selon un troisième agencement possible, l'armature de rigidification 140 est positionnée axialement à l'intérieur par rapport au brin aller 162 du flanc 30 correspondant, comme cela est représenté à la figure 8.

Selon le positionnement de la figure 5, l'armature de rigidification 140 est agencée de sorte à être entièrement adjacente au brin retour 163 du flanc 30 correspondant. Il peut toutefois être envisagé qu'il ne soit que partiellement adjacent au brin retour 163, comme c'est le cas aux figures 6, 7 et 8, auquel cas l'armature de rigidification 140 s'étend au-delà dudit brin retour 163. Selon un autre exemple de réalisation, non représenté, l'armature de rigidification 140 est agencée de sorte à ne pas être adjacente au brin retour 163 du flanc 30 correspondant, c'est-à-dire qu'elle serait adjacente uniquement à la portion 161 du brin aller 162 non-adjacente audit brin retour 163.

Les éléments de rigidification utilisé pour former l'armature de rigidification 140 peuvent comprendre des câbles métalliques ou textiles, voire être formés uniquement par des câbles métalliques ou uniquement par des câbles textiles.

Selon un autre mode de réalisation, les éléments de rigidification de l'armature de rigidification 140 comprennent des fils textiles et/ou métalliques. Les fils formant ont de préférence une section avec un diamètre inférieur à 1 mm, par exemple de l'ordre de 0,7 mm à 0,8 mm.

Les éléments de rigidification peuvent par exemple se présenter sous la forme de bandes, comme des bandes textiles ou métalliques. Selon un exemple particulier, les bandes utilisées ont une épaisseur de l'ordre de 1 mm et une largeur de l'ordre de 10 mm.

Il peut être avantageux que les éléments de rigidification soient fractionnés, cela facilitant notamment la fabrication du pneumatique. Cela est particulièrement le cas lorsque les éléments de rigidification formant l'armature de rigidification 140 se présentent sous la forme de bandelettes/bandes.

Le fractionnement des éléments de rigidification peut être réalisé par un procédé de coupe mécanique ou une coupe avec un moyen de type laser.

L'armature de rigidification (140) peut aussi comprendre plusieurs couches de bandelettes, en particulier superposées les unes sur les autres, afin d'augmenter la rigidité de l'armature de rigidification.

Les fils formant le textile sont par exemple fabriqués dans un matériau non élastomérique choisi parmi un polyester, un polyamide, une polycétone, un alcool polyvinylique, une cellulose, une fibre minérale, une fibre naturelle ou un mélange de ces matériaux.

Parmi les polyesters, on citera le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Parmi les polyamides, on citera un polyamide aliphatique comme le nylon ou un polyamide aromatique comme l'aramide. Parmi les alcools polyvinyliques, on citera le Kuralon (R). Parmi les celluloses, on citera la rayonne. Parmi les fibres minérales, on citera les fibres de verre et de carbone. Parmi les fibres naturelles, on citera les fibres de chanvre ou de lin.

Selon un mode de réalisation spécifique, les éléments de rigidification formant l'armature de rigidification 140 sont espacés d'un pas régulier, de préférence un pas de l'ordre de 1 mm.

Lorsque le pneumatique est fabriqué selon un procédé avec conformation, que la conformation soit réalisée en cours de confection de l'enveloppe, ou directement dans la presse, les éléments de rigidification formant l'armature de rigidification 140 sont de préférence posés à plat, lors de la confection du pneu, avant conformation.

Par exemple, au lieu de déposer une gomme rigide comme classiquement utilisé au niveau du bourrage de tringle, on vient enrouler comme lorsqu'on pose une nappe de frettage sommet, soit des bandelettes textiles fractionnées, soit des fils unitaires non coupés mais ondulés.

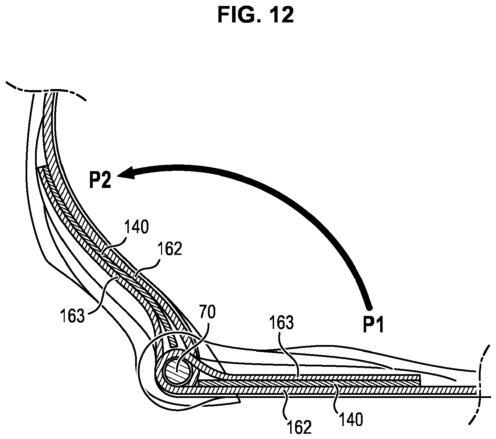

Le fractionnement des bandelettes textiles ou l'ondulation des fils unitaires posés facilitent la conformation ultérieure, c'est-à-dire le passage entre la position P1 à plat avant conformation et la position P2 conformée ayant un rayon plus grand (voir figure 12).

Avec certains procédés de réalisation du pneumatique, la zone basse peut être construite ou assemblée dans un état géométrique proche de sa forme finale, les éléments de rigidification formant l'armature de rigidification 140 peuvent alors être enroulés pendant ou avant la fabrication du pneu dans une position très proche de la position finale une fois que le pneumatique aura été cuit. Dans ces cas, le fractionnement des bandelettes n'est pas nécessaire.

### REFERENCES BIBLIOGRAPHIQUES

- WO2011/067211
- WO2013/127680
- WO2014/019939

## Revendications

1. Pneumatique pour véhicule automobile comprenant :
- deux bourrelets (20) destinés à entrer en contact avec une jante de montage (5), chaque bourrelet (20) comprenant au moins une structure annulaire de renforcement (70), chaque structure annulaire de renforcement (70) ayant un point radialement le plus à l'intérieur (71) ;
- deux flancs (30) prolongeant les bourrelets (20) radialement vers l'extérieur, les deux flancs (30) s'unissant à un sommet (25) comprenant une armature de sommet comportant au moins une nappe (80 ; 90) pourvue d'éléments de renforcement de sommet, l'armature de sommet étant en outre surmontée d'une bande de roulement (40) ;
- au moins une armature de carcasse (160) s'étendant depuis les bourrelets (20) à travers les flancs (30) jusqu'au sommet (25), l'armature de carcasse (160) comportant une pluralité d'éléments de renforcement de carcasse et étant ancrée dans les deux bourrelets (20) par un retournement autour de la structure annulaire de renforcement (70), de manière à former dans chaque bourrelet un brin aller (162) et un brin retour (163),
- une armature de rigidification (140) agencée dans au moins un flanc du pneumatique, ladite armature de rigidification (140) ayant une extrémité (141) radialement intérieure et une extrémité (142) radialement extérieure, l'armature de rigidification étant formée d'une pluralité d'éléments de rigidification orientés selon un angle inférieur ou égal à 10° par rapport à une direction circonférentielle du pneumatique,
dans lequel
- chaque brin retour (163) de l'armature de carcasse (160) s'étend radialement à l'extérieur jusqu'à une extrémité (164) située à une distance radiale DRE du point radialement le plus à l'intérieur (71) de la structure annulaire de renforcement (70) du bourrelet (20), la distance radiale DRE étant supérieure à 20% et inférieure ou égale à 95% d'une hauteur radiale H du pneumatique ; et
- ladite armature de rigidification (140) est agencée de telle sorte que la distance radiale DRR entre l'extrémité (141) radialement intérieure et l'extrémité (142) radialement extérieure est au moins égale à 10% de la distance radiale DRE du brin retour (163) du flanc (30) correspondant ;
**caractérisé en ce qu'**au moins une portion de l'armature de carcasse (160) comprend des éléments de renforcement croisés orientés selon un angle compris entre 70° et 80° par rapport à la direction circonférentielle, les éléments de renforcement croisés de l'armature de carcasse (160) étant radialement intérieurs à l'extrémité (142) radialement extérieure de l'armature de rigidification (140).

2. Pneumatique selon la revendication 1, dans lequel les éléments de renforcement croisés de l'armature de carcasse (160) sont agencés pour former le brin retour (163) et/ou au moins une portion du brin aller (162) ou dans lequel les éléments de renforcement croisés de l'armature de carcasse (160) sont agencés pour former le brin retour (163) et une portion du brin aller (162) adjacente audit brin retour (163).

3. Pneumatique selon la revendication 2, dans lequel la portion (161) du brin aller (162) non-adjacente audit brin retour (163) est formée d'éléments de renforcement non-croisés orientés selon un angle de l'ordre de 90° par rapport à la direction circonférentielle.

4. Pneumatique selon l'une quelconque des revendications 1 à 3, dans lequel les éléments de renforcement croisés de l'armature de carcasse (160) sont orientés selon un angle compris entre 75° et 80° par rapport à la direction circonférentielle.

5. Pneumatique selon l'une quelconque des revendications 1 à 4, dans lequel l'armature de carcasse (160) comprend des éléments de renforcement croisés orientés selon des angles opposés par rapport à la direction circonférentielle.

6. Pneumatique selon l'une quelconque des revendications 1 à 5, dans lequel l'armature de rigidification (140) est positionnée axialement entre le brin aller (162) et le brin retour (163) du flanc (30) correspondant, ou l'armature de rigidification (140) est positionnée axialement à l'extérieur par rapport au brin retour (163) du flanc (30) correspondant, ou l'armature de rigidification (140) est positionnée axialement à l'intérieur par rapport au brin aller (162) du flanc (30) correspondant.

7. Pneumatique selon l'une quelconque des revendications 1 à 6, dans lequel l'armature de rigidification (140) est agencée de sorte à être au moins partiellement adjacente au brin retour (163) du flanc (30) correspondant.

8. Pneumatique selon l'une quelconque des revendications 1 à 7, dans lequel l'armature de rigidification (140) est agencée de sorte à être entièrement adjacente au brin retour (163) du flanc (30) correspondant.

9. Pneumatique selon l'une quelconque des revendications 1 à 6, dans lequel l'armature de rigidification (140) est agencée de sorte à être non-adjacente au brin retour (163) du flanc (30) correspondant.

10. Pneumatique selon l'une quelconque des revendications 1 à 9, dans lequel les éléments de rigidification de l'armature de rigidification (140) comprennent des fils textiles et/ou métalliques, ou dans lequel les éléments de rigidification de l'armature de rigidification (140) sont formés à partir de câbles métalliques ou textiles, ou dans lequel les éléments de rigidification de l'armature de rigidification (140) sont formés à partir de fils fabriqués dans un matériau non élastomérique choisi parmi un polyester, un polyamide, une polycétone, un alcool polyvinylique, une cellulose, une fibre minérale, une fibre naturelle ou un mélange de ces matériaux.

11. Pneumatique selon l'une quelconque des revendications 1 à 10, dans lequel les éléments de rigidification de l'armature de rigidification (140) se présentent sous forme de bandes, les bandes ayant de préférence une épaisseur de l'ordre de 1 mm et une largeur de l'ordre de 10 mm.

12. Pneumatique selon l'une quelconque des revendications 10 et 11, dans lequel les éléments de rigidification de l'armature de rigidification (140) sont fractionnés, de préférence par une coupe mécanique ou une coupe laser.

13. Pneumatique selon l'une quelconque des revendications 1 à 12, dans lequel les éléments de rigidification de l'armature de rigidification sont espacés d'un pas régulier, de préférence un pas de l'ordre de 1 mm.

14. Pneumatique selon l'une quelconque des revendications 1 à 13, dans lequel les éléments de rigidification de l'armature de rigidification (140) sont noyés dans une composition caoutchouteuse présentant un module MA10 inférieur à 10 MPa, et de préférence compris entre 2 MPa et 6 MPa, le module MA10 étant défini, pour une gomme donnée, comme la valeur du module de traction mesuré pour un allongement relatif de 10% de ladite gomme à une température de 23°C au 2^{ème} cycle de mesure.

15. Pneumatique selon l'une quelconque des revendications 1 à 14, dans lequel les éléments de rigidification (140) sont orientés selon un angle de l'ordre de zéro degré par rapport à la direction circonférentielle du pneumatique.

## Patentansprüche

1. Reifen für ein Kraftfahrzeug, umfassend:
- zwei Wülste (20), die dazu bestimmt sind, mit einer Montagefelge (5) in Kontakt zu kommen, wobei jede Wulst (20) mindestens eine ringförmige Verstärkungsstruktur (70) umfasst, wobei jede ringförmige Verstärkungsstruktur (70) einen radial innersten Punkt (71) aufweist;
- zwei Flanken (30), die die Wülste (20) radial nach außen verlängern, wobei sich die beiden Flanken (30) an einem Scheitel (25) verbinden, der eine Scheitelbewehrung umfasst, die mindestens eine Lage (80; 90) aufweist, die mit Elementen zur Verstärkung des Scheitels versehen ist, wobei über der Scheitelbewehrung ferner ein Laufstreifen (40) liegt;
- mindestens eine Karkassenbewehrung (160), die sich von den Wülsten (20) durch die Flanken (30) bis zum Scheitel (25) erstreckt, wobei die Karkassenbewehrung (160) mehrere Elemente zur Verstärkung der Karkasse umfasst und in den beiden Wülsten (20) durch einen Umschlag um die ringförmige Verstärkungsstruktur (70) verankert ist, sodass in jeder Wulst ein Hinstrang (162) und ein Rückstrang (163) ausgebildet ist,
- eine Versteifungsbewehrung (140), die in mindestens einer Flanke des Reifens angeordnet ist, wobei die Versteifungsbewehrung (140) ein radial inneres Ende (141) und ein radial äußeres Ende (142) aufweist, wobei die Versteifungsbewehrung aus mehreren Versteifungselementen gebildet ist, die in einem Winkel von 10° oder weniger in Bezug auf eine Umfangsrichtung des Reifens ausgerichtet sind,
wobei
- sich jeder Rückstrang (163) der Karkassenbewehrung (160) radial außen bis zu einem Ende (164) erstreckt, das sich in einem radialen Abstand DRE vom radial innersten Punkt (71) der ringförmigen Verstärkungsstruktur (70) der Wulst (20) befindet, wobei der radiale Abstand DRE mehr als 20 % und weniger als oder gleich 95 % einer radialen Höhe H des Reifens beträgt; und
- die Versteifungsbewehrung (140) so angeordnet ist, dass der radiale Abstand DRR zwischen dem radial inneren Ende (141) und dem radial äußeren Ende (142) mindestens 10 % des radialen Abstands DRE des Rückstrangs (163) der entsprechenden Flanke (30) beträgt;
**dadurch gekennzeichnet, dass** mindestens ein Abschnitt der Karkassenbewehrung (160) gekreuzte Verstärkungselemente umfasst, die in einem Winkel zwischen 70° und 80° in Bezug auf die Umfangsrichtung ausgerichtet sind, wobei die gekreuzten Verstärkungselemente der Karkassenbewehrung (160) radial innerhalb des radial äußeren Endes (142) der Versteifungsbewehrung (140) liegen.

2. Reifen nach Anspruch 1, wobei die gekreuzten Verstärkungselemente der Karkassenbewehrung (160) so angeordnet sind, dass sie den Rückstrang (163) und/oder mindestens einen Abschnitt des Hinstrangs (162) bilden, oder wobei die gekreuzten Verstärkungselemente der Karkassenbewehrung (160) so angeordnet sind, dass sie den Rückstrang (163) und einen Teil des Hinstrangs (162), der an den Rückstrang (163) angrenzt, bilden.

3. Reifen nach Anspruch 2, wobei der Abschnitt (161) des Hinstrangs (162), der nicht an den Rückstrang (163) angrenzt, aus ungekreuzten Verstärkungselementen gebildet ist, die in einem Winkel im Bereich von 90° in Bezug auf die Umfangsrichtung ausgerichtet sind.

4. Reifen nach einem der Ansprüche 1 bis 3, wobei die gekreuzten Verstärkungselemente der Karkassenbewehrung (160) in einem Winkel zwischen 75° und 80° in Bezug auf die Umfangsrichtung ausgerichtet sind.

5. Reifen nach einem der Ansprüche 1 bis 4, wobei die Karkassenbewehrung (160) gekreuzte Verstärkungselemente umfasst, die in entgegengesetzten Winkeln in Bezug auf die Umfangsrichtung ausgerichtet sind.

6. Reifen nach einem der Ansprüche 1 bis 5, wobei die Versteifungsbewehrung (140) axial zwischen dem Hinstrang (162) und dem Rückstrang (163) der entsprechenden Flanke (30) positioniert ist oder die Versteifungsbewehrung (140) axial außerhalb in Bezug auf den Rückstrang (163) der entsprechenden Flanke (30) positioniert ist oder die Versteifungsbewehrung (140) axial innerhalb in Bezug auf den Hinstrang (162) der entsprechenden Flanke (30) positioniert ist.

7. Reifen nach einem der Ansprüche 1 bis 6, wobei die Versteifungsbewehrung (140) so angeordnet ist, dass sie zumindest teilweise an den Rückstrang (163) der entsprechenden Flanke (30) angrenzt.

8. Reifen nach einem der Ansprüche 1 bis 7, wobei die Versteifungsbewehrung (140) so angeordnet ist, dass sie vollständig an den Rückstrang (163) der entsprechenden Flanke (30) angrenzt.

9. Reifen nach einem der Ansprüche 1 bis 6, wobei die Versteifungsbewehrung (140) so angeordnet ist, dass sie nicht an den Rückstrang (163) der entsprechenden Flanke (30) angrenzt.

10. Reifen nach einem der Ansprüche 1 bis 9, wobei die Versteifungselemente der Versteifungsbewehrung (140) Textil- und/oder Metallfäden umfassen oder wobei die Versteifungselemente der Versteifungsbewehrung (140) aus Metall- oder Textilseilen gebildet sind oder wobei die Versteifungselemente der Versteifungsbewehrung (140) aus Fäden gebildet sind, die aus einem nichtelastomeren Material gefertigt sind, das aus Polyester, Polyamid, Polyketon, Polyvinylalkohol, Zellulose, Mineralfaser, Naturfaser oder einer Mischung dieser Materialien ausgewählt ist.

11. Reifen nach einem der Ansprüche 1 bis 10, wobei die Versteifungselemente der Versteifungsbewehrung (140) die Form von Streifen aufweisen, wobei die Streifen vorzugsweise eine Dicke im Bereich von 1 mm und eine Breite im Bereich von 10 mm aufweisen.

12. Reifen nach einem der Ansprüche 10 und 11, wobei die Versteifungselemente der Versteifungsbewehrung (140) fraktioniert sind, vorzugsweise durch einen mechanischen Schnitt oder einen Laserschnitt.

13. Reifen nach einem der Ansprüche 1 bis 12, wobei die Versteifungselemente der Versteifungsbewehrung mit einem regelmäßigen Abstand, vorzugsweise einem Abstand im Bereich von 1 mm, voneinander beabstandet sind.

14. Reifen nach einem der Ansprüche 1 bis 13, wobei die Versteifungselemente der Versteifungsbewehrung (140) in eine Kautschukzusammensetzung eingebettet sind, die einen Modul MA10 von weniger als 10 MPa und vorzugsweise zwischen 2 MPa und 6 Mpa aufweist, wobei der Modul MA10 für einen gegebenen Gummi als der Wert des Zugmoduls definiert ist, der bei einer relativen Dehnung des Gummis von 10 % bei einer Temperatur von 23 °C im zweiten Messzyklus gemessen wird.

15. Reifen nach einem der Ansprüche 1 bis 14, wobei die Versteifungselemente (140) in einem Winkel im Bereich von null Grad in Bezug auf die Umfangsrichtung des Reifens ausgerichtet sind.

## Claims

1. Tyre for a motor vehicle, comprising:
- two beads (20) intended to come into contact with a mounting rim (5), each bead (20) comprising at least one annular reinforcing structure (70), each annular reinforcing structure (70) having a radially innermost point (71);
- two sidewalls (30) extending the beads (20) radially outwards, the two sidewalls (30) meeting at a crown (25) comprising a crown reinforcement having at least one ply (80; 90) provided with crown reinforcing elements, the crown reinforcement being furthermore surmounted by a tread (40);
- at least one carcass reinforcement (160) extending from the beads (20) through the sidewalls (30) as far as the crown (25), the carcass reinforcement (160) having a plurality of carcass reinforcing elements and being anchored in the two beads (20) by a turn-up around the annular reinforcing structure (70), so as to form in each bead a main strand (162) and a turn-up strand (163),
- a stiffening reinforcement (140) arranged in at least one sidewall of the tyre, said stiffening reinforcement (140) having a radially inner end (141) and a radially outer end (142), the stiffening reinforcement being formed of a plurality of stiffening elements oriented at an angle less than or equal to 10° relative to a circumferential direction of the tyre,
wherein
- each turn-up strand (163) of the carcass reinforcement (160) extends radially outwards as far as an end (164) situated at a radial distance DRE from the radially innermost point (71) of the annular reinforcing structure (70) of the bead (20), the radial distance DRE being greater than 20% and less than or equal to 95% of a radial height H of the tyre; and
- said stiffening reinforcement (140) is arranged such that the radial distance DRR between the radially inner end (141) and the radially outer end (142) is at least equal to 10% of the radial distance DRE from the turn-up strand (163) of the corresponding sidewall (30);
**characterized in that** at least a portion of the carcass reinforcement (160) comprises crossed reinforcing elements oriented at an angle of between 70° and 80° relative to the circumferential direction, the crossed reinforcing elements of the carcass reinforcement (160) being radially inside the radially outer end (142) of the stiffening reinforcement (140).

2. Tyre according to Claim 1, wherein the crossed reinforcing elements of the carcass reinforcement (160) are arranged so as to form the turn-up strand (163) and/or at least a portion of the main strand (162) or wherein the crossed reinforcing elements of the carcass reinforcement (160) are arranged so as to form the turn-up strand (163) and a portion of the main strand (162) that is adjacent to said turn-up strand (163).

3. Tyre according to Claim 2, wherein the portion (161) of the main strand (162) that is not adjacent to said turn-up strand (163) is formed of non-crossed reinforcing elements oriented at an angle of approximately 90° relative to the circumferential direction.

4. Tyre according to any one of Claims 1 to 3, wherein the crossed reinforcing elements of the carcass reinforcement (160) are oriented at an angle of between 75° and 80° relative to the circumferential direction.

5. Tyre according to any one of Claims 1 to 4, wherein the carcass reinforcement (160) comprises crossed reinforcing elements oriented at opposite angles relative to the circumferential direction.

6. Tyre according to any one of Claims 1 to 5, wherein the stiffening reinforcement (140) is positioned axially between the main strand (162) and the turn-up strand (163) of the corresponding sidewall (30), or the stiffening reinforcement (140) is positioned axially on the outside relative to the turn-up strand (163) of the corresponding sidewall (30), or the stiffening reinforcement (140) is positioned axially on the inside relative to the main strand (162) of the corresponding sidewall (30).

7. Tyre according to any one of Claims 1 to 6, wherein the stiffening reinforcement (140) is arranged so as to be at least partially adjacent to the turn-up strand (163) of the corresponding sidewall (30).

8. Tyre according to any one of Claims 1 to 7, wherein the stiffening reinforcement (140) is arranged so as to be entirely adjacent to the turn-up strand (163) of the corresponding sidewall (30).

9. Tyre according to any one of Claims 1 to 6, wherein the stiffening reinforcement (140) is arranged so as not to be adjacent to the turn-up strand (163) of the corresponding sidewall (30).

10. Tyre according to any one of Claims 1 to 9, wherein the stiffening elements of the stiffening reinforcement (140) comprise textile and/or metallic threads, or wherein the stiffening elements of the stiffening reinforcement (140) are formed from metallic or textile cords, or wherein the stiffening elements of the stiffening reinforcement (140) are formed from threads manufactured from a non-elastomeric material chosen from a polyester, a polyamide, a polyketone, a polyvinyl alcohol, a cellulose, a mineral fibre, a natural fibre or a mixture of these materials.

11. Tyre according to any one of Claims 1 to 10, wherein the stiffening elements of the stiffening reinforcement (140) are in the form of strips, the strips preferably having a thickness of approximately 1 mm and a width of approximately 10 mm.

12. Tyre according to either one of Claims 10 and 11, wherein the stiffening elements of the stiffening reinforcement (140) are split, preferably by mechanical cutting or laser cutting.

13. Tyre according to any one of Claims 1 to 12, wherein the stiffening elements of the stiffening reinforcement are spaced apart by a regular pitch, preferably a pitch of approximately 1 mm.

14. Tyre according to any one of Claims 1 to 13, wherein the stiffening elements of the stiffening reinforcement (140) are embedded in a rubber composition having a modulus MA10 of less than 10 MPa, and preferably between 2 MPa and 6 MPa, the modulus MA10 being defined, for a given rubber, as the value of the tensile modulus measured for a relative elongation of 10% of said rubber at a temperature of 23°C in the 2^{nd} measurement cycle.

15. Tyre according to any one of Claims 1 to 14, wherein the stiffening elements (140) are oriented at an angle of approximately zero degrees relative to the circumferential direction of the tyre.
